# EUROPEAN PATENT SPECIFICATION

(11) **EP 1 412 121 B1**
(45) Date of publication and mention of the grant of the patent: **11.03.2009**
(21) Application number: 01967855.6
(22) Date of filing: 26.07.2001
(51) Int. Cl.: B23D 61/18, B23D 57/00

(54) **SAW, SAWING INSTALLATION AND USE OF A SAW**
SÄGE, SÄGEVORRICHTUNG UND VERWENDUNG EINER SÄGE
SCIE, INSTALLATION DE SCIAGE ET UTILISATION D'UNE SCIE

(43) Date of publication of application: 28.04.2004
(73) Proprietor: Smit Engineering B.V., 3000 BA Rotterdam (NL); Widia Nederland B.V., 3047 AH Rotterdam (NL)
(72) Inventor: VERGOUW, Theodorus, Christianus, Maria, NL-2871 CG Schoonhoven (NL); VAN DER ROER, Antonius, Leonardus, NL-3065 KC Rotterdam (NL); GLERUM, Paul, Lieven, NL-4306 CK Nieuwerkerk (NL); VAN DER WEL, Marc, Patrick, NL-3312 HC Dordrecht (NL); VERHOEFF, Tom, NL-3295 VJ 'S-Gravendeel (NL)
(74) Representative: van Westenbrugge, Andries
(86) International application number: PCT/NL2001/000579
(87) International publication number: WO 2003/009960

(56) References cited:
- WO-A-98/35778
- DE-A- 1 805 417
- DE-A- 3 507 188
- GB-A- 2 243 094
- US-A- 6 131 558

## Description

The present invention relates to a saw for sawing through an object, the saw comprising:
- a wire, such as a wire cable;
- a plurality of bushes threaded on the wire; and
- stop means provided at each end of the wire for holding the bushes on the wire;
wherein the circumferential surfaces of the bushes are provided with cutting means;
wherein the passage of each bush has a cross section larger than the cross section of the wire such that each bush is slidable on said wire.

The object to be sawn through using the saw according to the invention will in general be made of stone and/or concrete and/or metal, such as steel.

A saw of this type is known. DE-A-1.805.417 discloses a saw for working brittle materials such as stone. To that end, bushes are provided on an endless wire. Each bush is accommodated between two respective abutments.

SU-757.391 discloses a chain saw for shipwrecks. The chain appears to be a sort of ordinary bicycle chain, which is provided with cutting/sawing teeth. Disadvantages of this chain saw are inter alia that it is complicated and thus expensive in structure and that it requires a very specific orientation with respect to the shipwreck for being able to saw. A further disadvantage is that this chain saw is susceptible to breakage as a consequence of the great number of links and the circumstances prevalent when sawing a ship.

Further chain saws with which the links are provided, directly or via intermediate pieces, with saw teeth attached thereto, are known from forestry and related fields, see for example US 3,192,973, US 4,518,022 and US 4,258,763. Also those kinds of chain saws are susceptible to breakage as a consequence of the great number of links.

The object of the present invention is to provide an improved saw which can withstand large forces, is less susceptible to breakage and is suitable for sawing through on-shore structures, off-shore structures and especially ships. On-shore structures are meant to include buildings, bridges etc. on land. Off-shore structures are meant to include drilling platforms, oil and gas industry installations, pipelines etc. on sea.

The above mentioned aim is achieved according to the invention by providing a saw characterized in that the wire has an end connection at each end, in that the stop means are provided at each end of the wire and in that the stop means engage, at least are engageable, on the one hand with the respective end connection and on the other hand with the respective terminal bush.

As the bushes are slidable on the wire, i.e. they are not fixed to the wire, they will, during sawing, tend to slide away from the direction in which the wire is pulled for sawing, called the sawing direction. The stop on the wire end facing away from the sawing direction, called the downstream stop, will prevent the bushes from sliding off the wire. Said stop will push the bushes in the sawing direction from downstream the place of sawing while the wire is pulled in sawing direction from upstream the place of sawing. The pulling force is transferred by the wire to the downstream stop. The wire can or at least can be made to withstand high tensile forces, is not weakened by a great number of connections as the bushes are slidable, and the bushes provided with cutting means need no mutual couplings, which are susceptible to breakage, as they push against each other. One thus could say that the stop means are engageable on the one hand with the respective end connection (for transferring the pulling force from the wire to the stop) and on the other hand with the respective terminal bush (for transferring said pulling force further to said bush as a pushing force) so as to exert a pushing force on the bushes upon exerting a pulling force on the other end connection, the pushing and pulling force acting in the same direction.

Saws according to the invention will in general be operated in a manner moving back and forth. In order to provide a dampening of the back and forth movement of the bushes upon changing the sawing direction, it is according to the invention advantageous when the stop means are resiliently compressible. A further advantage of resilient compressible stop means is that those can provide the additional length required for bending a saw which, in straight condition, is fully filled with bushes.

Such resiliently compressible stop means can according to the invention advantageously comprise one or more disc springs. With disc spring is meant a disc shaped element threaded on the wire and having in axial direction, i.e. wire direction, a tapered shape on both sides in the same taper direction. With respect to the dampening force as well as length compensation capability it is preferred to have a plurality of disc springs, wherein adjacent disc springs are preferably arranged in mirrored relation to each other.

In order to improve the slidability of the bushes along a curved wire, it is according to the invention advantageous when the passage of each bush widens at and towards the longitudinal ends of the bush.

In order to prevent interspaces at the outside curve of a curved part of the saw, it is according to the invention advantageous when adjacent bushes are provided with mutually mating, cylindrically or specially curved end faces. In this respect it is possible to provide either bushes of a type with both ends faces convex curved as well as of the type with both end faces concave curved, or to provide all identical bushes having one concave curved end face and one convex curved end face.

In order to improve the shock absorbing capability of the saw, it is according to the invention advantageous when resilient elements are provided between adjacent bushes. Such resilient elements can for example be disc springs or discs of polyurethane.

The saw according to the invention will preferably be manufactured by threading the bushes on the wire like threading a string of beads. For sawing it is preferred, if not required, to have the wire fully filled with bushes. This, however, decreases the bendability of the saw. For transport purposes it is however practical if one can roll up the saw wit a relatively small radius. For this reason it is according to the invention preferred when at least one bush is a filler bush made of two shells demountably fixable to each other by for example bolts or clamping action. The shells of the filler bush(es) for in assembled condition a bush. It is preferred that those filler bushes made of two halves are arranged at the end(s) of the wire. This because those ends will not be subjected to sawing actions so that the relatively more vulnerable bushes made of two halves are kept at a safe place. Further, those filler bushes do not need to be provided with cutting means, and in general will not be provided with cutting means.

In order to prevent interspaces between adjacent bushes upon exerting a pulling force on the wire, it is according to the invention advantageous when filler elements are provided on the wire, which are resiliently compressible and expansible to compensate for elongation of the wire under influence of a pulling force.

Although the cutting means can comprise many kind of cutting means, among which most certainly also toothlike cutting elements, it is according to the invention preferred when the cutting means comprise a machining surface coating. Such a coating is reliable in its fixation and less susceptible to breakage than toothlike elements.

According to the invention, a machining surface coating can be produced particularly well by providing the bushes with a surface coating containing grit , such as grit consisting of hard metal, cermet, ceramic material or mixtures thereof. Grit grains, in particular hard metal grit grains, are relatively hard and have a good machining action. Hard metals, ceramics and cermets are well known in the prior art and have good wear characteristics so that they are used for example as cutting tools. Hard metals, ceramics and cermets in the form of grit also have a good machining action. Hard metals essentially comprise a hard phase of carbides, nitrides and/or borides of one or more of the elements of the IVa-, Va- or VIa-group of the Periodic System and a binder of the iron group, preferably of Co and/or Ni. Cermets essentially comprise a hard phase which main part consists of a carbonitride of the aforesaid metals. The composition essentially comprises carbides, nitrides, carbonitrides, carbooxinitrides and/or borides of one or more of the elements of the IVa-, Va- oder VIa-group of the Periodic System and a binder of the iron group of the Periodic System, preferably Co and/or Ni. Furthermore also ceramics are known as wear resistant against abrasion and/or corrosion.

The grit can be produced by crushing hard metal-, ceramic- or cermet-bodies, including worn cutting tools of hard metal (or sintered carbides), cermets and ceramics, especially for cutting metals, said tools can be uncoated or coated with a layer applied by physical vapour deposition or chemical vapour deposition. Examples for hard metal-, ceramic- or cermet-bodies and the coatings are described in Metall, 45. Jg. Heft 3, March 1991, pages 224-235. These bodies can be shreddered or otherwise crushed to grains, whereafter this grit, especially as an unsorted mixture of the aforesaid materials, can be mixed with suitable brazing materials or other granular additives of hard metals, cermets, ceramics or mixtures thereof. After heating this mixture above the melting point of the brazing material and cooling down this solution to room temperature, you can get a solid bar, wherein a relative dense package of the grits is fixed by the brazing material which fills up the interspaces between the grits. Heating this bar above the melting temperature of the brazing material, but lower than the melting temperature of the grit makes it possible to deposit a layer onto a bush or parts of the bush. The minimum thickness of this layer is determined by the grain size of the grit. When cooling this surface layer the brazing material hardens. It is also possible to deposit one or more layers of grit embedded in the brazing material. Suitable brazer consist preferably of copper, tin and zinc. The brazer can optionally comprise additives like Al and/or Ag.

As partly aforementioned the grit can be produced by crushing worn hard metal- and/or cermet- and/or ceramic-tools, sieving the crushed grit-mixture to limit the greatest grain size to a maximum diameter which should be preferably less than 6 mm and covering the outer surface of the bushes or parts thereof with a dense layer of grits by brazing. The layer thickness (of a single layer) is than about 4 mm to 6 mm whereby advantageously grit-tips can protrude out of the surrounding brazer-surface.

In a further embodiment of the invention two grit-layers embedded in brazer can be applied to the bushes of the saw or the parts of the bushes to be covered. The total thickness of these two layers is then preferably between 6 mm and 12 mm.

With respect to the grain size Applicant has found more general, that the grit grains can have a grain size of 3 to 18 mm, particularly good results being obtained with grit grains having a grain size in the range from 4 to 10 mm. In this context it should be clear that the grit grains do not all have to have an identical grain size, but that, rather than this, this grain size will vary. In this context it is also pointed out that the machining surface coating can also contain grit grains which have a grain size lying outside the said ranges. However, the Applicant has found that grains within the said ranges contribute to the machining action particularly well. In particular, according to the invention the average grain size of the grit grains will be within the above mentioned ranges.

According to the invention, the grit grains can be applied relatively simply and effectively by fixing these to the bushes by means of hard soldering.

Taking into account the field of application of the saw according to he invention, the bushes will preferably:
- have a length, considered in wire direction, of at least 8 cm, preferably 12 cm or more, such as about 15 cm; and/or
- have an outer diameter of at least 5 cm, preferably 7,5 cm or more, such as about 8,3 cm; and/or
- the diameter of the passages is at least 22 mm, preferably 30 mm or more, such as about 38 mm and the outer diameter of the wire is at least 20 mm, preferably 28 mm or more, such as about 35 mm, respectively.
In order to prevent sticking or jamming of the bushes on the wire, it is according to the invention preferred when the outer diameter of the wire is about 1 tot 4 mm, preferably about 2 to 3 mm, smaller than the diameter of the passage in each bush.

According to a further aspect, the invention relates to a sawing installation comprising a saw according to the invention.

According to still a further aspect, the invention relates to the use of a saw according to the invention for sawing through an object containing stone and/or concrete and/or metal such as steel.

The present invention will be explained in more detail below with reference to illustrative embodiments shown diagrammatically in the drawing. In the drawing:
Fig. 1 shows, diagrammatically, a first sawing installation according to the invention, a saw according to the invention and the use thereof;
Fig. 2 shows, schematically, an end section of a saw according to the invention;
Fig. 3 shows, in longitudinal cross section, a more detailed view of a first type of bush for a saw according to the invention;
Fig. 4 shows, schematically, a view of a saw according to the invention;
Fig. 5 shows, in longitudinal cross-section, a more detailed view of a second type of bush for a saw according to the invention; and
Fig. 6 shows, diagrammatically, a second sawing installation according to the invention.

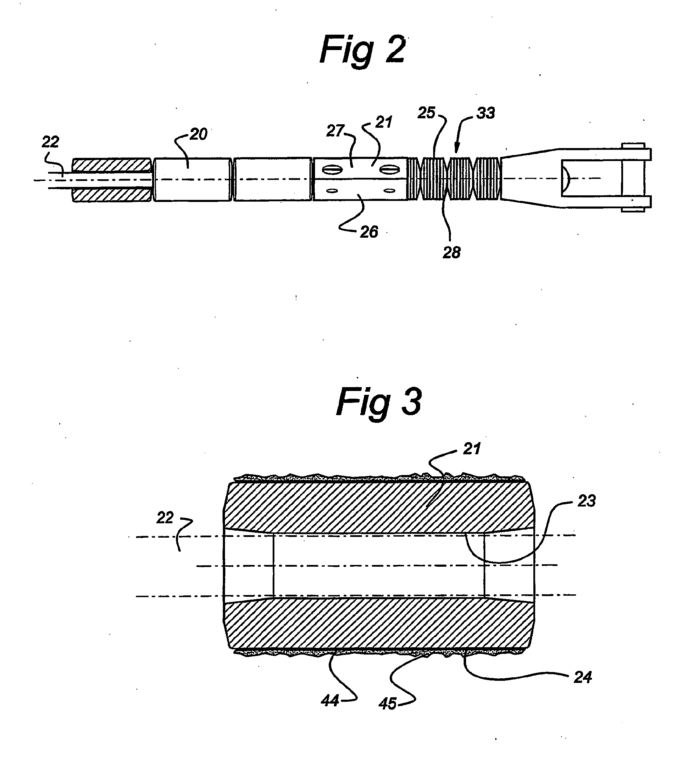

With reference to Figures 2, 3 and 4, the saw comprises, according to a first embodiment of the invention, a carrier in the form of a wire cable 22, such as a steel cable, made of a plurality of twisted threads as is known from the prior art. The wire cable carries a number (depending from the length of the saw) cylindrical bushes 21 threaded on the wire cable 22. The bushes enclose a cylindrical passage 23 for the wire cable 22.

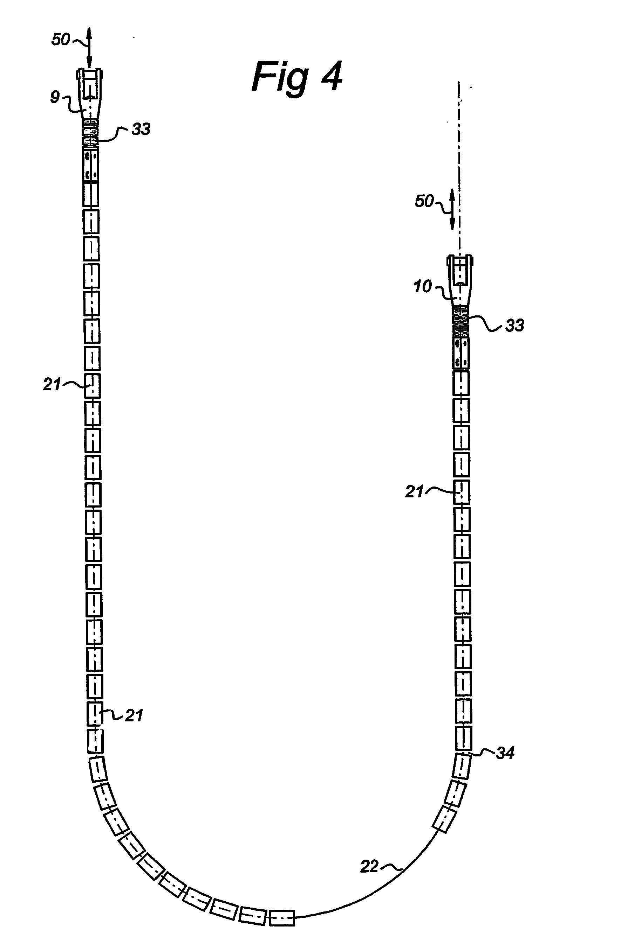

The cross-section or diameter of the passage 23 is about 3 mm larger than the cross-section or diameter of the wire cable, so that the bushes 21 are slidable along the wire cable 22 without substantial resistance from the wire cable. Referring to Figure 4, in which, only for clarity, some bushes in the right corner below are not shown, this means that if one pulls the end connection 9 in upward direction, the bushes 21 in contact with the object to be sawn will follow this movement by virtue of being pushed by the other, downstream, end connection 10. By means of tensile forces in the wire cable 22 the upward pulling force exerted on the end connection 9 is almost completely transferred to the end connection 10, which in turn exerts a pushing force on the string of bushes 21.

When the sawing direction is reversed, for example from pulling upward end connection 9 to pulling upward end connection 10, and also during sawing, the bushes 21 will undergo acceleration with respect to the wire cable 22. In order to decelerate the bushes 21 smoothly the saw is provided with stop means 33 in the form of resilient compressible dampening means. Those dampening means consist according to the example of Figure 2 of packages 25 spring discs 28. Each spring disc 28 is a kind of plate like element arranged transverse to the wire cable 22 around said cable. The opposite faces of the plate like elements have an essentially corresponding taper in the extension direction of the wire cable. As known from the prior art of spring discs, adjacent discs can be arranged in parallel configuration as well as mirrored configuration. The two middle discs of each full package 25 as well as the outermost discs 28 of each package are arranged in mirrored configuration. Contrary to what Figure 2 shows, it is according to the invention advantageous to have all adjacent spring discs in a mirrored configuration with respect to each other.

In order to be able to transport the saw in a compact rolled up condition, it is preferred to place removable filler elements in the string of bushes to keep them in engagement with each other. Those filler elements can be one or more filler bushes 21. In order to be able to arrange those filler bushes 21 on the wire cable 22, they are made of two halves 26 and 27 fixed to each other by for example bolts.

As can be seen in Figure 3, the passage 23 tapers at the opposite ends towards the mouths of the passage 23. This in order to improve the bending behaviour of the saw. In case the saw bends, the wire cable 22 will need some additional length, which is easily provided for by the resilient compressible dampening means.

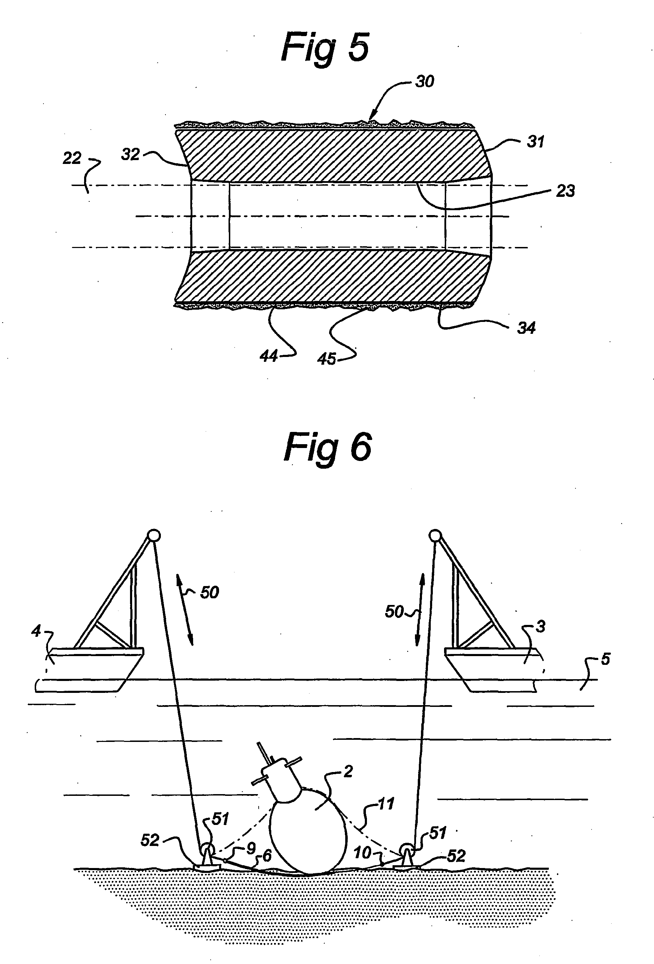

With reference to Figure 5, the bending behaviour of the saw can be further improved by giving the opposite end faces of a bush 30 a concave shape 32 respectively convex shape 31. The concave shaped end face 32 of one bush will then engage in a convex shaped end face 31 of an adjacent bush. This embodiment prevents interspaces 34 (see Fig. 4) arising at the outer curve of a curved part of the saw.

In order to obtain a sawing action the circumferential surfaces 24, 34 of the bushes 21, 30 are provided with cutting means, such as cutting teeth (not shown). According to the invention those cutting means comprise preferably a machining or abrasive surface coating 44, such as grit 45.

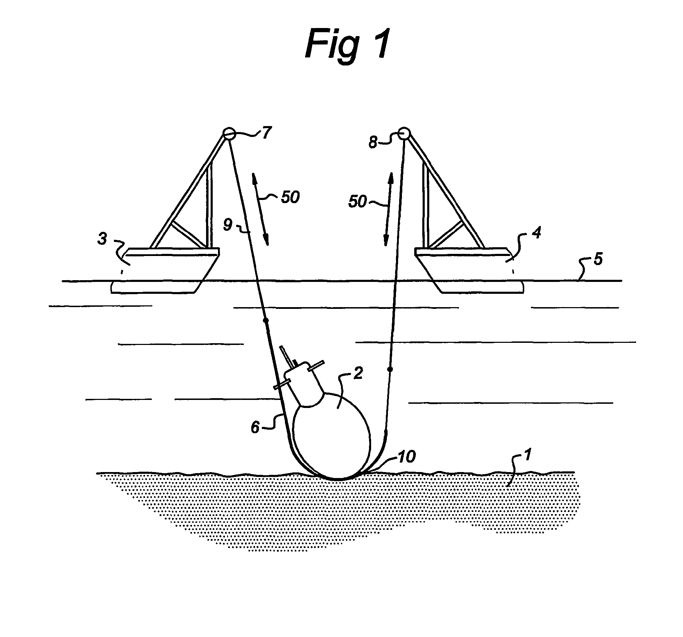

Fig. 1 shows, diagrammatically, and certainly not with the correct size relationships, a shipwreck 2 lying on the sea bed 1 and two vessels 3 and 4 on the surface of the sea 5. Fig. 1 also shows, diagrammatically, a sawing installation according to the invention, which sawing installation comprises a saw 6 mounted between two heave cables 7 and 8 supported on the vessels 3 and 4, respectively.

As is customary per se from the prior art in the case of conventional sawing with normal chains, the saw 6 will first be pushed through beneath the shipwreck 2 that is lying on the bed 1 of the sea 5. Using the saw 6 pushed through beneath the ship in this way, it is possible to saw moving back and forth in a conventional manner, by moving the two ends 9 and 10 of the saw up and down (double-headed arrows 50) from a pontoon or vessel 3,4. However, the speed of movement of the saw will according to the invention be approximately 1 m/sec.

With reference to Fig. 6 according to the invention it is advantageous if wire guides 51, such as return wheels, are provided at the sea bed 1 on either side of the shipwreck, which wire guides can be fixed to the sea bed 1 by means of anchors 52, such as so-called suction anchors. Since not the entire heave cable / saw assembly will have a sawing action when sawing up and down (double-headed arrows 50), in the case of the installation and method according to Figure 1 as well as 5 it will be possible for such an assembly which is provided with the saw 6 only on that portion that is located close to the sea bed 1 to suffice. This portion will have a length of at least the sum of the horizontal width of the saw cut and once, preferably twice, the stroke executed by the heave cables 7, 8 on sawing up and down. In the case of the saw according to the invention, bed guides 51 are not necessarily needed when sawing up and down. However, these have the advantage that the forces required for moving the heave cable / saw assembly up and down are lower. As depicted by dotted line 11 the saw can also be arranged over the shipwreck 2 to saw in downward direction, instead of upward direction. Advantage is that one does not have to push the saw 6 through beneath the ship before starting sawing in upward direction.

In order to saw through the shipwreck 2, in the examples shown in figures 1 and 5, along an essentially vertical saw cut face, the saw 6 will be moved to and fro at a speed of, in particular up to approximately 1 m/sec. In use, the machining action of the saw according to the invention creates, in case it is provided with a machining surface coating, chips having a chip length of some millimetres. In the case of an ordinary ship's chain or anchor chain as conventionally used this will as far as possible not result, or barely result, in a sawing effect unless extremely large forces are exerted to drive the chain round, in which case, however, it will then not be sawing by machining that takes place, but sawing by a sort of pulverisation of the parts of the shipwreck to be sawn through.

By, in accordance with the invention, taking, instead of an anchor chain, a saw 6 provided with a machining surface coating, machining sawing through of a shipwreck 2 becomes possible in such a way that a considerably lower force being required. Because use is made of a saw which has a machining coating provided on the surface of the bushes, it is not absolutely essential to provide guides (such as the guides 51, anchored by anchors 52, in Fig. 5) at the sea bed, and more particularly to the shipwreck, to guide the saw 6 over (indicated by dashed line 11) a shipwreck in order to be able to saw by machining. However, such guides, such as the guides 51 in Fig. 6, can advantageously be used with the method and installation according to Figure 1 in order to lower the forces required for moving the saw. In principle, it is conceivable to apply a machining surface coating, for example a surface coating in the form of hard metal grit grains with a grain size of which the average value is in the range from 4 to 10 mm, on the bushes 20,21.

The cylindrical outer contour of the bushes as well as the cylindrical inner contour of the passages and the cylindrical contour of the wire cable have as advantage that the saw is as it were self seeking if it encounters a portion that is difficult to saw, in the sense that the saw can make a diversion around this portion. A further advantage is that one does not have to position the saw with respect to the ship. According to the invention one can also drive the saw for moving to and fro by means of a drive arranged on the sea bed, for example on or near the suction anchors 52. Such a drive can comprise winches and/or hydraulic cylinders.

In order to reduce elongation of the wire, producing the saw according to the invention will advantageously comprise tensioning of the wire so that a potentially present elongation determined by the manufacturing .of the wire itself is removed by transferring it into a permanent elongation. This principle as such is known from the prior art. The elongated, relaxed wire will then be provided with bushes.

## Claims

1. Saw for sawing through an object, the saw comprising:
• a wire, such as a wire cable;
• a plurality of bushes threaded on the wire; and
• stop means for holding the bushes on the wire;
wherein the circumferential surfaces of the bushes are provided with cutting means;
wherein the passage of each bush has a cross section larger than the cross section of the wire such that each bush is slidable on said wire;
**characterized in that** the wire has an end connection at each end, **in that** the stop means are provided at each end of the wire and **in that** the stop means engage, at least are engageable, on the one hand with the respective end connection and on the other hand with the respective terminal bush.

2. Saw according to claim 1, wherein the stop means are resiliently compressible.

3. Saw according to claim 2, wherein the stop means comprise one or more disc springs,

4. Saw according to claim 3, wherein the stop means comprise a plurality of disc springs, such as about 20 disc spring at each wire end.

5. Saw according to claim 4, having adjacent disc springs arranged in mirrored relation to each other.

6. Saw according to one of the preceding claims, wherein the passage of each bush widens at and towards the longitudinal ends of the bush,

7. Saw according to one end of the preceding claims, wherein adjacent bushes are provided with mating, cylindrically or spherically curved end faces.

8. Saw according to one of the preceding claims, wherein resilient elements are provided between adjacent bushes.

9. Saw according to one of the preceding claims, wherein filler elements are provided on the wire, which are resiliently compressible and expansible.

10. Saw according to one of the preceding claims, wherein at least one bush is a filler bush made of two shells demountably fixable to each other.

11. Saw according to claim 10, wherein said at least one bush made of two bush halves is arranged at the ends(s) of the wire.

12. Saw according to one of the preceding claims, wherein the bushes as well as the wire have a circular cross section.

13. Saw according to one of the preceding claims, wherein the cutting means comprises a machining surface coating.

14. Saw according to claim 13, wherein the machining surface coating comprises grit, such as grit consisting of hard metals, cermets, ceramics or mixtures thereof.

15. Saw according to claim 14, wherein the hard metal essentially comprises a hard phase of carbides, nitrides and/or borides of one or more of the elements of the IVa-, Va- or VIa-group of the Periodic System and a binder of Co and/or Ni.

16. Saw according to claim 14, wherein the cermet essentially comprises a hard phase of carbides, nitrides, carbonitrides, carbooxinitrides and/or or borides of one or more of the elements of the IVa-, Va- or VIa-group of the Periodic System and a binder of Co and/or Ni.

17. Saw according to one of the claims 14-16, wherein the grit is produced by crushing sintered hard metal bodies, ceramic bodies of cerment bodies, including worn tools of these materials, or mixtures thereof, sieving the crushed grit or the grit mixture to limit the greatest grain size to a maximum diameter of 4 mm to 6 mm and covering the outer surface of the bushes or parts thereof with a dense layer of grits by brazing, hard soldering or welding.

18. Saw according to one of the claims 13-17, wherein the machining surface coating contains one of two layers, each having a thickness ≥ 4 mm to 12 mm, preferably ≥ 6 mm.

19. Saw according to one of the claims 14-18, wherein the grit is applied by brazing, hard soldering or welding.

20. Saw according to claim 19, wherein the brazer consists of copper or of a copper alloy with copper and at least one of the metals tin or zinc, preferably of a copper-tin-zinc alloy.

21. Saw according to claim 20, wherein the copper-alloy comprises additives like A1 and/or Ag

22. Saw according to one of the claims 13-21, wherein the grains of the grit have a grain size in the range from 3 to 18 mm, such as 4 to 10 mm.

23. Saw according to one of the preceding claims, wherein the bushes:
• have a length of at least 8 cm, preferably 12 cm or more, such as about 15 cm; and/or
• have an outer diameter of at least 5 cm, preferably 7,5 cm or more, such as about 8,3 cm; and/or
• the diameter of the passages is at least 22 mm, preferably 30 mm or more, such as about 38 mm and the outer diameter of the wire is at least 20 mm, preferably 28 mm or more, such as about 35 mm, respectively.

24. Saw according to one of the preceding claims, wherein the outer diameter of the wire is about 1 tot 4 mm, preferably about 2 to 3 mm, smaller than the diameter of the passage in each bush.

25. Sawing installation for sawing through an object that is in the water or on land, comprising a saw according to one of claims 1-24.

26. Use of a saw according to one of claims 1-24 for sawing through an object containing stone and/or concrete and/or metal, such as steel.

27. Use of a saw according to one of claims 1-24 for sawing through a ship, especially a shipwreck.

## Patentansprüche

1. Säge zum Sägen durch ein Objekt, wobei die Säge umfasst:
- einen Draht, wie beispielsweise ein Drahtkabel;
- eine Vielzahl von Hülsen, die auf den Draht gefädelt sind; und
- Stoppmittel zum Halten der Hülsen auf dem Draht;
bei der die Umfangsoberflächen der Hülsen mit Schneidmitteln vorgesehen sind;
bei welcher der Durchgang von jeder Hülse einen Querschnitt aufweist, der größer als der Querschnitt des Drahts ist, so dass jede Hülse auf dem Draht verschiebbar ist;
**dadurch gekennzeichnet, dass** der Draht eine Endverbindung an jedem Ende aufweist, dass die Stoppmittel an jedem Ende des Drahtes vorgesehen sind und dass die Stoppmittel eingreifen auf, zumindest eingreifbar sind auf, auf der einen Seite mit der entsprechenden Endverbindung und auf der anderen Seite mit der entsprechenden Anschlusshülse.

2. Säge nach Anspruch 1, bei der die Stoppmittel elastisch komprimierbar sind.

3. Säge nach Anspruch 2, bei der die Stoppmittel eine oder mehrere Tellerfedern umfassen.

4. Säge nach Anspruch 3, bei der die Stoppmittel eine Vielzahl von Tellerfedern, wie beispielsweise ungefähr 20 Tellerfedern, an jedem Drahtende umfassen.

5. Säge nach Anspruch 4, bei der benachbarte Tellerfedern zueinander auf eine gespiegelte Weise angeordnet sind.

6. Säge nach einem der vorhergehenden Ansprüche, bei welcher sich der Durchgang von jeder Hülse an und in Richtung zu den longitudinalen Enden der Hülse aufweitet.

7. Säge nach einem der vorhergehenden Ansprüche, bei der benachbarte Hülsen mit zylindrisch oder kugelförmig gekrümmten Anschlussendflächen vorgesehen sind.

8. Säge nach einem der vorhergehenden Ansprüche, bei der elastische Elemente zwischen benachbarten Hülsen vorgesehen sind.

9. Säge nach einem der vorhergehenden Ansprüche, bei der Füllelemente auf dem Draht vorgesehen sind, die elastisch komprimierbar und erweiterbar sind.

10. Säge nach einem der vorhergehenden Ansprüche, bei der wenigstens eine Hülse eine Füllhülse ist, die aus zwei Schalen gefertigt ist, die abnehmbar befestigbar miteinander sind.

11. Säge nach Anspruch 10, bei der wenigstens eine Hülse, die aus zwei Hülsenhälften gefertigt ist, an dem Ende bzw. den Enden des Drahts angeordnet ist.

12. Säge nach einem der vorhergehenden Ansprüche, bei der sowohl die Hülsen als auch der Draht einen kreisförmigen Querschnitt aufweist.

13. Säge nach einem der vorhergehenden Ansprüche, bei der das Schneidmittel eine Beschichtung der Bearbeitungsoberfläche umfasst.

14. Säge nach Anspruch 13, bei der die Beschichtung der Bearbeitungsoberfläche eine Körnung umfasst, wie beispielsweise eine Körnung, die aus harten Metallen, Cermeten, Keramiken oder Mischungen davon besteht.

15. Säge nach Anspruch 14, bei der das harte Metall im Wesentlichen eine harte Phase von Karbiden, Nitriden und/oder Boriden aus einem oder mehreren Elementen der IVa-, Va- oder VIa-Gruppe des periodischen Systems und ein Bindemittel aus Co und/oder Ni umfasst.

16. Säge nach Anspruch 14, bei der das Cermet im Wesentlichen eine harte Phase von Karbiden, Nitriden, Karbonitriden, Karbooxinitriden und/oder Boriden aus einem oder mehreren Elementen aus der IVa-, Va- oder VIa-Gruppe des periodischen Systems und ein Bindemittel aus Co und/oder Ni umfasst.

17. Säge nach einem der Ansprüche 14 bis 16, bei der die Körnung mittels Zermahlens von gesinterten harten Metallkörpern, Keramikkörpern aus Cermentkörpern, enthaltend abgenutzte Werkzeuge dieser Materialien, oder Mischungen davon, Sieben der zermahlenen Körnung oder der Körnungsmischung, um die größte Korngröße auf einen maximalen Durchmesser von 4 mm bis 6 mm zu begrenzen, und Beschichten der Außenoberfläche der Hülsen oder Teilen davon mit einer dichten Schicht von Körnungen mittels Löten, Hartlöten oder Schweißen hergestellt ist.

18. Säge nach einem der Ansprüche 13 bis 14, bei der die Beschichtung der Bearbeitungsoberfläche eine von zwei Schichten enthält, wobei jede eine Dicke von ≥ 4 mm bis 12 mm, bevorzugt ≥ 6 mm enthält.

19. Säge nach einem der Ansprüche 14 bis 18, bei der die Körnung mittels Löten, Hartlöten oder Schweißen aufgebracht ist.

20. Säge nach Anspruch 19, bei der das Hartlot aus Kupfer oder einer Kupferlegierung mit Kupfer und wenigstens einem aus den Metallen Zinn oder Zink, vorzugsweise aus einer Kupfer-Zinn-Zink-Legierung, besteht.

21. Säge nach Anspruch 20, bei der die Kupferlegierung Zusatzstoffe wie Al und/oder Ag umfasst.

22. Säge nach einem der Ansprüche 13 bis 21, bei der die Körner der Körnung eine Korngröße im Bereich von 3 bis 18 mm, wie beispielsweise 4 bis 10 mm aufweisen.

23. Säge nach einem der vorhergehenden Ansprüche, bei der die Hülsen:
- eine Länge von wenigstens 8 cm, vorzugsweise 12 cm oder mehr, wie beispielsweise ungefähr 15 cm, aufweisen;
und/oder
- einen Außendurchmesser von wenigstens 5 cm, vorzugsweise 7,5 cm oder mehr, wie beispielsweise ungefähr 8,3 cm, aufweisen; und/oder
- entsprechend der Durchmesser der Durchgänge wenigstens 22 mm, vorzugsweise 30 mm oder mehr, wie beispielsweise ungefähr 38 mm, beträgt und der Außendurchmesser des Drahts wenigstens 20 mm, vorzugsweise 28 mm oder mehr, wie beispielsweise 35 mm, beträgt.

24. Säge nach einem der vorhergehenden Ansprüche, bei welcher der Außendurchmesser des Drahts ungefähr 1 bis 4 mm, vorzugsweise ungefähr 2 bis 3 mm, kleiner als der Durchmesser des Durchgangs in jeder Hülse ist.

25. Sägeeinrichtung zum Sägen durch ein Objekt, das sich in Wasser oder an Land befindet, umfassend eine Säge nach einem der Ansprüche 1 bis 24.

26. Verwendung einer Säge nach einem der Ansprüche 1 bis 24 zum Sägen durch ein Objekt, das Stein und/oder Beton und/oder Metall, wie beispielsweise Stahl, umfasst.

27. Verwendung einer Säge nach einem der Ansprüche 1 bis 24 zum Sägen durch ein Schiff, im Besonderen ein Schiffswrack.

## Revendications

1. Scie conçue pour scier un objet, la scie comprenant :
un fil métallique tel qu'un câble métallique ;
une pluralité de bagues enfilées sur le fil métallique ; et
des moyens d'arrêt destinés à retenir les bagues sur le fil métallique ;
dans laquelle les surfaces circonférentielles des bagues sont munies de moyens de coupe ;
dans laquelle le passage de chaque bague a une coupe transversale supérieure à la coupe transversale du fil métallique de telle sorte que chaque bague puisse coulisser sur ledit fil métallique ;
**caractérisée en ce que** le fil métallique présente un raccord d'extrémité à chaque extrémité, **en ce que** les moyens d'arrêt sont positionnés à chaque extrémité du fil métallique, et **en ce que** les moyens d'arrêt viennent en prise, ou du moins sont aptes à venir en prise, d'une part avec le raccord d'extrémité respectif et d'autre part avec la bague terminale respective.

2. Scie selon la revendication 1, dans laquelle les moyens d'arrêt sont compressibles de manière élastique.

3. Scie selon la revendication 2, dans laquelle les moyens d'arrêt comprennent une ou plusieurs rondelle(s) Belleville.

4. Scie selon la revendication 3, dans laquelle les moyens d'arrêt comprennent une pluralité de rondelles Belleville, telles qu'environ vingt rondelles Belleville à chaque extrémité du fil métallique.

5. Scie selon la revendication 4, ayant des rondelles Belleville adjacentes disposées en miroir les unes par rapport aux autres.

6. Scie selon l'une quelconque des revendications précédentes, dans laquelle le passage de chaque bague s'élargit au niveau des extrémités longitudinales de la bague et vers celles-ci.

7. Scie selon l'une quelconque des revendications précédentes, dans laquelle les bagues adjacentes sont munies de faces d'extrémité correspondantes, incurvées de manière cylindrique ou sphérique.

8. Scie selon l'une quelconque des revendications précédentes, dans laquelle des éléments élastiques sont positionnés entre des rondelles adjacentes.

9. Scie selon l'une quelconque des revendications précédentes, dans laquelle des éléments de remplissage compressibles et extensibles de manière élastique sont positionnés sur le fil métallique.

10. Scie selon l'une quelconque des revendications précédentes, dans laquelle au moins une bague est une bague de remplissage faite de deux coquilles pouvant être fixées l'une à l'autre de manière démontable.

11. Scie selon la revendication 10, dans laquelle ladite au moins une bague faite de deux moitiés de bague est disposée à l'extrémité/aux extrémités du fil métallique.

12. Scie selon l'une quelconque des revendications précédentes, dans laquelle les bagues ainsi que le fil métallique ont une coupe transversale circulaire.

13. Scie selon l'une quelconque des revendications précédentes, dans laquelle les moyens de coupe comprennent un revêtement de surface usiné.

14. Scie selon la revendication 13, dans laquelle le revêtement de surface usiné comprend de l'abrasif, tel qu'un abrasif consistant en des métaux durs, des cermets, des produits céramiques ou des mélanges de ceux-ci.

15. Scie selon la revendication 14, dans laquelle le métal dur comprend sensiblement une phase dure de carbures, de nitrures et/ou de borures d'un ou plusieurs des éléments des groupes IV-a, V-a ou VI-a du Système Périodique, et un liant de Co et/ou de Ni.

16. Scie selon la revendication 14, dans laquelle le cermet comprend sensiblement une phase dure de carbures, de nitrures, de carbonitrures, des oxycarbonitrures et/ou des borures d'un ou plusieurs éléments des groupes IV-a, V-a ou VI-a du Système Périodique, et un liant de Co et/ou de Ni.

17. Scie selon l'une des revendications 14 à 16, dans laquelle l'abrasif est produit par broyage de corps en métal dur fritté, de corps en céramique ou de corps en cermet, comprenant des outils usés faits de ces matériaux, ou des mélanges de ceux-ci, tamisage de l'abrasif broyé ou du mélange d'abrasifs pour limiter la grosseur supérieure du grain abrasif à un diamètre maximal allant de 4 à 6 mm, et par revêtement de la surface externe des bagues ou de parties de celle-ci d'une couche dense d'abrasif, par brasage, brasage fort, ou soudage.

18. Scie selon l'une des revendications 13 à 17, dans laquelle le revêtement de surface usiné contient une ou deux couches dont chacune a une épaisseur supérieure ou égale à 4 mm, de préférence supérieure ou égale à 6 mm et pouvant atteindre 12 mm.

19. Scie selon l'une des revendications 14 à 18, dans laquelle l'abrasif est appliqué par brasage, brasage fort ou soudage.

20. Scie selon la revendication 19, dans laquelle la brasure consiste en du cuivre ou en un alliage de cuivre comprenant du cuivre et au moins un métal parmi l'étain ou le zinc, de préférence en un alliage de cuivre-étain-zinc.

21. Scie selon la revendication 20, dans laquelle l'alliage de cuivre comprend des adjuvants tels que l'Al et/ou l'Ag.

22. Scie selon l'une quelconque des revendications 13 à 21, dans laquelle les grains de l'abrasif ont une grosseur du grain allant de 3 à 18 mm, telle que de 4 à 10 mm.

23. Scie selon l'une quelconque des revendications précédentes, dans laquelle les bagues :
ont une longueur supérieure ou égale à 8 cm, de
préférence supérieure ou égale à 12 cm, telle que de 15 cm environ ; et/ou
ont un diamètre externe supérieur ou égal à 5 cm, de préférence supérieur ou égal à 7,5 cm, tel que de 8,3 cm environ ; et/ou
le diamètre des passages est supérieur ou égal à 22 mm, de préférence supérieur ou égal à 30 mm, tel que de 38 mm environ, et le diamètre externe du fil métallique est supérieur ou égal à 20 mm, de préférence supérieur ou égal à 28 mm, tel que de 35 mm environ, respectivement.

24. Scie selon l'une quelconque des revendications précédentes, dans laquelle le diamètre externe du fil métallique est inférieur d'environ 1 à 4 mm, de préférence d'environ 2 à 3 mm, au diamètre du passage de chaque bague.

25. Installation de sciage conçue pour scier un objet qui est situé dans l'eau ou sur terre, comprenant une scie selon l'une quelconque des revendications 1 à 24.

26. Usage d'une scie selon l'une quelconque des revendications 1 à 24 pour scier un objet contenant de la pierre, et/ou du béton et/ou du métal, tel que de l'acier.

27. Usage d'une scie selon l'une quelconque des revendications 1 à 24 pour scier un navire, spécialement une épave.
